# EUROPÄISCHE PATENTSCHRIFT

(11) **EP 2 002 119 B1**
(45) Veröffentlichungstag und Bekanntmachung des Hinweises auf die Patenterteilung: **01.11.2017**
(21) Anmeldenummer: 07727487.6
(22) Anmeldetag: 29.03.2007
(51) Int. Cl.: F03D 9/00, F01K 25/00, F01K 27/00, F03G 7/04

(54) **VERFAHREN UND VORRICHTUNG ZUR UMWANDLUNG VON ENERGIE**
METHOD AND DEVICE FOR CONVERTING ENERGY
PROCÉDÉ ET DISPOSITIF DE CONVERSION D'ÉNERGIE

(30) Priorität: 31.03.2006 DE 102006015527; 04.04.2006 DE 102006016111; 03.05.2006 DE 102006020752; 25.09.2006 DE 102006045559; 09.11.2006 DE 102006053180; 01.03.2007 WO PCT/EP2007/051940
(43) Veröffentlichungstag der Anmeldung: 17.12.2008
(73) Patentinhaber: Wolter, Klaus, 40625 Düsseldorf (DE)
(72) Erfinder: Wolter, Klaus, 40625 Düsseldorf (DE)
(74) Vertreter: Cohausz & Florack
(86) Internationale Anmeldenummer: PCT/EP2007/053015
(87) Internationale Veröffentlichungsnummer: WO 2007/113200

(56) Entgegenhaltungen:
- WO-A-96/01363
- DE-A1- 19 517 897
- US-A- 3 987 632
- US-A- 4 291 232
- US-A1- 2003 005 697

## Beschreibung

Die Erfindung betrifft ein Verfahren, eine Vorrichtung und ein System zur Umwandlung von Energie.

Ein Beispiel für eine Vorrichtung zur Umwandlung von Energie ist ein Aufwindkraftwerk. Für ein Aufwindkraftwerk wird Luft von der Sonne erwärmt und einem Kamin zugeführt, in dem sie aufsteigt. Eine in dem Kamin angeordnete Turbine kann dann aus der Luftströmung elektrischen Strom erzeugen.

Die Erfindung basiert auf der Überlegung, dass in solchen und anderen Vorrichtungen zur Umwandlung von Energie die vorhandene Energie nicht optimal genutzt wird.

Die Druckschrift US 4,291,232 beschreibt ein Energieerzeugungssystem, in dem eine Flüssigkeit unter Druck von unten nach oben durch einen Energieerzeugungsmechanismus fließt.

Die Druckschrift US 2003/005697 A1 beschreibt ein System, in dem heißes Gas mit absorbiertem Wasserdampf einen Motor antreibt. Ein Kondensierer/Trenner kondensiert Wasserdampf in dem Gas und trennt nicht-kondensierbares Gas von der Flüssigkeit.

Die Druckschrift DE 195 17 897 A1 beschreibt ein System, in dem eine Kraftmaschine mit Fluiddampf angetrieben wird, wobei mechanische Energie abgegeben wird und das Fluid wieder kondensiert.

Die Druckschrift WO 96/01363 A1 beschreibt ein System, in dem ein dampf- bzw. gasförmiges Fluid eine Entspannungsmaschine treibt. In der Entspannungsmaschine wird die Druckenergie im Gas bis auf den notwendigen Gegendruck abgebaut und mechanische Arbeit an eine Welle abgegeben. Dabei wird das Gas kälter. Die vollständige Entspannung und eine Verflüssigung erfolgen nach einer weiteren Entspannungsstufe.

Die Druckschrift US 3,987,632 beschreibt ein System, in dem flüssige Luft in einen gasförmigen Zustand umgewandelt und einer Turbine für gasförmige Luft zugeführt wird. Das Abgas der Turbine wird der Atmosphäre zugeführt.

Die Erfindung stellt einen alternativen oder ergänzenden Ansatz zur Umwandlung von vorhandener Wärmeenergie zur Verfügung, der es zudem erlaubt, die Umwandlung effizienter zu realisieren als dies in bekannten Vorrichtungen der Fall ist.

Die Erfindung wird durch die Ansprüche definiert.

Es wird also vorgeschlagen, dass vorhandene Wärmeenergie eingesetzt wird, um potentielle Energie zu gewinnen, die dann wiederum in die gewünschte Energieform umgewandelt werden kann. Die potentielle Energie wird dabei gewonnen, indem ein nicht-gasförmiges - also festes oder flüssiges - Trägermedium in einen gasförmigen Aggregatzustand versetzt wird und dadurch aufsteigt. Wieder in einen nicht-gasförmigen Aggregatzustand versetzt steht das Trägermedium mit eingeprägter potentieller Energie dann für die Energiegewinnung zur Verfügung.

Es ist ein Vorteil der Erfindung, dass sie eine effiziente Energieumwandlung einer vorhandenen Wärmeenergie in eine gewünschte Energieform ermöglicht. Zudem kann sie mit verhältnismäßig kleinen baulichen Ausmaßen implementiert werden.

Bei geeigneter Wahl der eingebrachten Wärmeenergie kann die Erfindung zudem so implementiert werden kann, dass sie vollkommen emissionsfrei ist. Generell kann aber jegliche Energiequelle zur Gewinnung der genutzten Wärmeenergie verwendet werde. So kann die eingebrachte Wärmeenergie aus Erdwärme, Wasserwärme, Luftwärme, einem fossilen Energieträger, einem Kernenergieträger und/oder Sonnenenergie gewonnen wird.

Die Wärmeenergie kann ausschließlich am Ausgangspunkt des aufsteigenden Trägermediums eingebracht werden, vorrichtungsmäßig somit ausschließlich über den Aggregatszustandsveränderer. In einem alternativen Ansatz kann die Wärmeenergie aber auch verteilt über die Höhe, die das gasförmige Trägermedium überwindet, in das Trägermedium eingebracht werden.

Die Vorrichtung kann hierzu ein entsprechend angeordnetes Energieeinbringungselement aufweisen. Ein solches Energieeinbringungselement kann selber ein Energiegewinnungselement umfassen, oder aber von einem Energiegewinnungselement mit Energie versorgt werden.

Ein über die Höhe verteiltes Einbringen der Wärmeenergie hat den Vorteil, dass insgesamt weniger externe Wärmeenergie zugeführt werden muss. So kann auf ausgewählten Höhen oder kontinuierlich entlang der Höhe eines Hohlraums jeweils genau so viel Energie zugeführt werden, dass das Trägermedium bis zum Erreichen der vorgegebenen Höhe im gasförmigen Zustand verbleibt.

Darüber hinaus kann die Erfindung wesentlich kompakter und kostengünstiger implementiert werden, wenn beispielsweise Solarkollektoren als Energiegewinnungs-und -einbringungselemente unmittelbar auf der Hülle eines Hohlraums, in dem das gasförmige Trägermedium aufsteigt, angebracht werden oder gar diese Hülle ganz oder teilweise bilden.

Das Energieeinbringungselement kann einen Hohlraum, in dem das Trägermedium aufsteigt, komplett umschließen, oder beispielsweise im Fall von Solarkollektoren nur auf einer sonnenzugewandten Seite angeordnet sein. Ferner kann sich das Element über die gesamte Höhe des Hohlraums erstrecken oder nur auf einem ausgewählten Höhenabschnitt oder auf mehreren ausgewählten Höhenabschnitten angeordnet sein. Das Rückumwandeln des gasförmigen Trägermediums in ein nicht-gasförmiges Trägermedium erfolgt durch Kühlung des gasförmigen Trägermediums mittels eines Transportmediums. Die Kühlung kann dabei zum Beispiel dadurch erfolgt, dass das Transportmedium durch in der vorgegebenen Höhe angeordnete Kühlbereiche etwa eines Kühlaggregats geleitet wird. Die Kühlbereiche können dabei durch Schläuche oder sonstige Leitungen gebildet werden. Die Kühlbereiche können dabei so ausgebildet und angeordnet werden, dass sie gleichzeitig zur Ableitung des rückgewonnenen nicht-gasförmigen Trägermediums zu einer vorgesehenen Sammelstelle genutzt werden können. Eine durch die Kühlung des Trägermediums erfolgte Erwärmung des Transportmediums wird darüber hinaus genutzt, um einen Beitrag zu der eingebrachten Wärmeenergie zu liefern. Hierzu kann vorrichtungsmäßig eine Wärmerückführungsleitung vorgesehen werden, die das erwärmte Transportmedium dem am unteren Ende des Hohlraums angeordneten Aggregatzustandsveränderer zuführt. Eine solche Ausführungsform hat den Vorteil, dass sie besonders effizient ist, da während des Betriebes von außen nur die Verlustenergien, einschließlich der entnommenen Nutzenergien, eingebracht werden müssen.

In einer alternativen oder ergänzenden Ausführungsform könnte zur Unterstützung der Rückumwandlung auch ein Stoff unmittelbar in das gasförmige Trägermedium eingebracht werden, beispielsweise durch einen entsprechend ausgebildeten Sammler. Das Einbringen kann dabei etwa durch Einsprühen oder Einregnen erfolgen. Nachdem der Stoff dem Trägermedium Wärme entzogen und damit die Kondensation unterstützt hat, können Stoff und Trägermedium zur weiteren Verwendung wieder separiert werden. Dies kann beispielsweise auf einfache Weise erfolgen, wenn das Trägermedium Wasser und der Stoff Öl ist. Stattdessen kann aber auch bereits rückgewonnenes Trägermedium in das aufsteigende, gasförmige Trägermedium eingesprüht oder eingeregnet werden, bevor es der Energieumwandlung der enthaltenen potentiellen Energie zugeführt wird. Durch die somit vergrößerte Kollisionsoberfläche für das aufsteigende, noch gasförmige Trägermedium wird die Rückumwandlung ebenfalls unterstützt. Hierbei sollte lediglich sichergestellt werden, dass das eingesprühte oder eingeregnete Trägermedium nicht zurück in den Aggregatszustandsveränderer fällt, sondern dennoch der Energiewandlungsanordnung zugeführt wird. Dies kann beispielsweise dadurch erreicht werden, dass das Trägermedium erst in einem am oberen Ende abgewinkelten Bereich des Hohlraums eingesprühte oder eingeregnete wird. Der Sammler kann weiterhin eine - gegebenenfalls gekühlte - obere Begrenzungsfläche des Hohlraums umfassen, die so ausgebildet ist, dass sie das rückumgewandelte nicht-gasförmiges Transportmedium beispielsweise über ein Sammelbecken der Energiewandlungsanordnung zuleitet.

In einer beispielhaften Ausführungsform wird das rückgewonnene nicht-gasförmiges Trägermedium vor der Umwandlung der gewonnenen potentiellen Energie des Trägermediums in eine andere Energieform zwischengespeichert, etwa mittels eines Zwischenspeichers.

Eine Zwischenspeicherung des rückgewonnenen nicht-gasförmigen Trägermediums ist zum Beispiel geeignet, eine Reserve zu liefern für Zeiten in denen keine externe Wärmeenergie zur Verfügung steht. Des Weiteren lassen sich mit einer Zwischenspeicherung Spitzenbedarfe an der gewünschten Energieform abdecken oder aber Spitzen in der Lieferung des rückgewonnenen nicht-gasförmigen Trägermediums abpuffern.

Zur Umwandlung der potentiellen Energie des Trägermediums in eine andere Energieform kann die potentielle Energie zunächst in kinetische Energie umgewandelt werden. Dies kann erfolgen, indem das rückgewonnene nicht-gasförmige Trägermedium auf einem Fallweg von einer höheren Höhe auf eine niedrigere Höhe fallengelassen wird, etwa durch ein Fallrohr. Die kinetische Energie kann dann in eine andere Energieform umgewandelt werden. Hierzu kann ein Energiewandler, wie eine Turbine mit einem eventuell nachgeschalteten Generator, vorgesehen werden.

Im Endergebnis kann die potentielle Energie in jede beliebige Energieform umgewandelt werden. Es versteht sich, dass das Umwandeln in eine gewünschte Energieform auch das Speichern in einem gewünschten Energieträger umfasst. In Frage kommen somit unter anderem eine Umwandlung in mechanische Energie, in elektrische Energie, in Energie zur Erzeugung eines chemischen Energieträgers und/oder in Energie zur Erzeugung eines physikalischen Energieträgers.

Auch nach der Umwandlung der potentiellen Energie in eine andere Energieform kann das rückgewonnene nicht-gasförmige Trägermedium bei Bedarf in einem Zwischenspeicher zwischenspeichert werden.

Stattdessen oder im Anschluss kann das rückgewonnene nicht-gasförmige Trägermedium nach der Umwandlung der potentiellen Energie in eine andere Energieform zumindest teilweise in einem geschlossenen Kreislauf weiter eingesetzt werden. Vorrichtungsmäßig wird das Trägermedium hierzu dem Aggregatzustandsveränderer wieder zugeführt.

Durch das Umwandeln des nicht-gasförmigen Trägermediums in ein gasförmiges Trägermedium kann das Trägermedium je nach Zusammensetzung darüber hinaus destilliert werden. Das destillierte, rückgewonnene nicht-gasförmigen Trägermediums kann dann vor oder nach der Umwandlung der potentiellen Energie in eine andere Energieform zumindest teilweise über einen Entnahmeanschluss entnommen wird.

Wird zum Beispiel Meereswasser als Trägermedium eingesetzt, so verdampft vereinfacht dargestellt Wasser, gelöste Gase werden frei und Salze fällen aus. Im Kondensationsbereich in der vorgegebenen Höhe steht dann vornehmlich reines Wasser zur Verfügung. Hieraus ergeben sich wieder vielfältige Anwendungs- und Ausführungsmöglichkeiten, wie Trinkwassergewinnung und Bewässerung. Wird Brauchwasser oder Abwasser aus Industrie oder Haushalten als Trägermedium eingesetzt, so kann mittels der Destillation eine Brauchwasser oder Abwasserreinigung erfolgen, sowie eine Gewinnung der Reststoffe.

Das gasförmige Trägermedium kann in einem Hohlraum aufsteigen, der bis auf eventuelle Verunreinigungen keine weiteren Stoffe beinhaltet. Alternativ kann der Hohlraum aber auch ein Füllmedium umfassen, das von dem aufsteigenden gasförmigen Trägermedium mitgenommen wird. Für das Füllmedium kommt Luft oder jegliches andere Gas oder Gasgemisch in Frage.

Die Verwendung eines Füllmediums erlaubt es, Druckunterschiede zwischen dem Hohlraum und der äußeren Umgebung auszugleichen. Solche Druckunterschiede können sich aufgrund verschiedener Betriebstemperaturen, die durch die Änderungen der Aggregatzustände des Trägermediums hervorgerufen werden, ergeben. Da das Füllmedium durch das Trägermedium mitgenommen wird, kann ein geschlossener Kreislauf für das Füllmedium vorgesehen werden, in dem das Füllmedium nach Entfernen des Trägermediums in der vorgegebenen Höhe wieder im Verdampfer zur Verfügung gestellt wird. Alternativ kann aber auch ein offenes System vorgesehen werden, in dem das Füllmedium von außen durch die Mitnahme innerhalb des Hohlraums angesaugt wird und nach der Nutzung wieder nach außen entlassen wird.

Generell bieten sich für alle eingesetzten und nicht zur externen Nutzung entnommenen Stoffe, wie Trägermedium, Transportmedium und Füllmedium, sowie für alle nicht zur externen Nutzung entnommenen Energien Ausführungsformen mit geschlossenen Kreisläufen sowie mit offenen Durchläufen an.

Die Erfindung wird im Folgenden anhand eines beispielhaften Ausführungsbeispiels näher erläutert. Dabei zeigt:
- Fig. 1: schematisch den Aufbau einer beispielhaften, erfindungsgemäßen Vorrichtung,
- Fig. 2: ein schematisches Flussdiagram, dass den Betrieb der Vorrichtung auf Figur 1 erläutert;
- Fig. 3: ein schematisches Blockdiagram einer beispielhaften, erfindungsgemäßen Vorrichtung; und
- Fig. 4: schematisch den Aufbau einer weiteren beispielhaften erfindungsgemäßen Vorrichtung;
- Fig. 5: schematisch den Aufbau einer weiteren beispielhaften erfindungsgemäßen Vorrichtung; und
- Fig. 6: schematisch eine beispielhafte Wärmerückgewinnung in einer erfindungsgemäßen Vorrichtung.

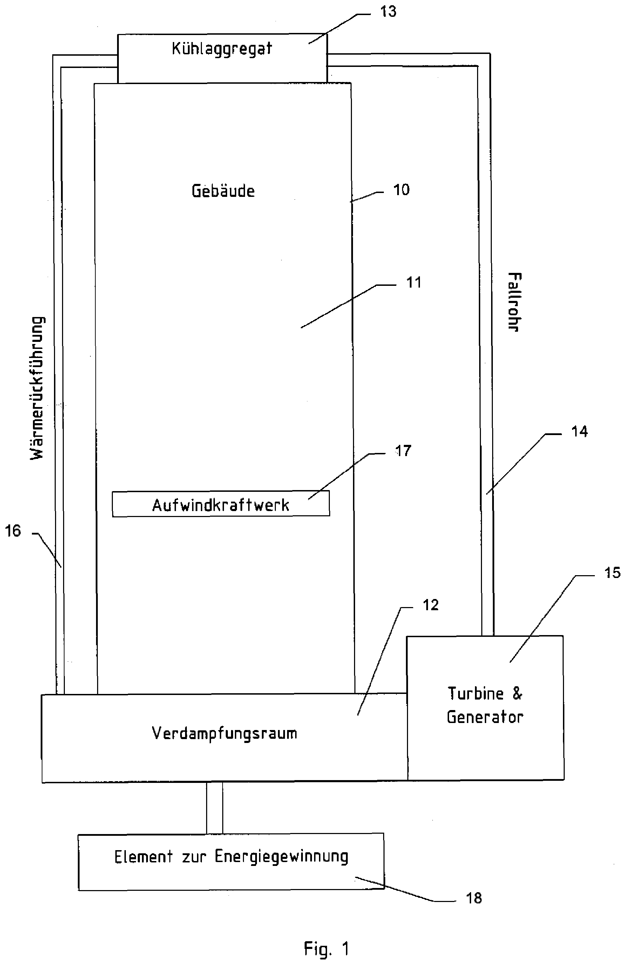

Figur 1 zeigt ein Ausführungsbeispiel einer erfindungsgemäßen Vorrichtung zur effizienten Umwandlung von Energie.

Die Vorrichtung umfasst ein Gebäude 10, dass einen Hohlraum 11 aufweist. Es versteht sich, dass der Hohlraum in einer alternativen Ausbildung auch schräg angeordnet sein könnte, beispielsweise an die Flanke eines Hügels angrenzend. Am unteren Ende des Hohlraums 11 auf der Höhe h = h₀ ist ein Verdampfungsraum 12 angeordnet.

Am oberen Ende des Hohlraums 11 auf der Höhe h = h₁ ist ein Kühlaggregat 13 angeordnet. Von dem Kühlaggregat 13 führt ein Fallrohr 14 zu einer Turbine 15 mit einem daran angeschlossenen Generator. Die Turbine 15 steht wiederum in Verbindung mit dem Verdampfungsraum 12. Das Kühlaggregat 13 steht darüber hinaus über eine Wärmerückführungsleitung 16 mit dem Verdampfungsraum 12 in Verbindung.

In dem Hohlraum ist des Weiteren optional die Turbine eines konventionellen Aufwindkraftwerks 17 angeordnet.

Schließlich ist ein Element 18 zur Wärmeenergiegewinnung so angeordnet, dass es dem Verdampfungsraum 11 Wärmeenergie zuführen kann. Ein Beispiel für ein solches Element ist ein Solarkollektor. Anstelle der Sonne kann aber auch jede beliebige andere Energiequelle von dem Element 18 genutzt werden. Es versteht sich des Weiteren, dass auch eine Mehrzahl solcher Elemente vorgesehen sein kann.

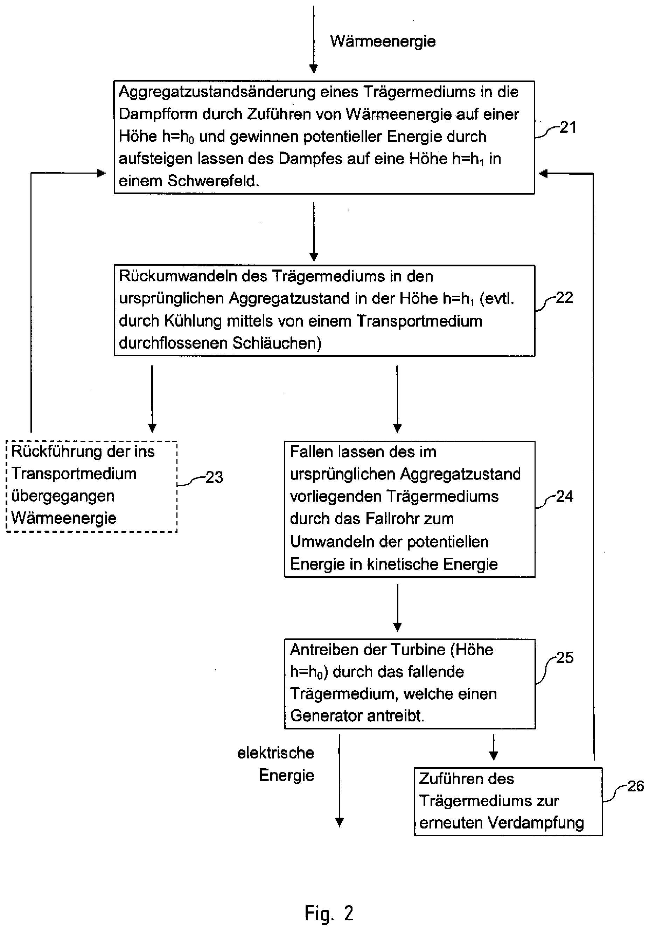

Figur 2 zeigt ein Flussdiagram, das die prinzipielle Funktionsweise der Vorrichtung aus Figur 1 veranschaulicht.

In dem Verdampfungsraum 12 befindet sich ein Trägermedium in nicht-gasförmigem Aggregatszustand, beispielsweise Wasser als flüssiges Trägermedium.

Dem Verdampfungsraum 12 wird von dem Element 18 zur Energiegewinnung externe Wärmeenergie zugeführt (Schritt 21).

Aufgrund der zugeführten Wärmeenergie wird das Trägermedium in einen gasförmigen Aggregatszustand umgewandelt, das heißt, es verdampft und steigt in dem Hohlraum 11 auf.

Auf der Höhe h = h₁ wird das Trägermedium in den vorherigen Aggregatszustand zurückversetzt (Schritt 22). Das heißt, der Dampf aus dem Trägermedium wird wieder kondensiert. In dem dargestellten Beispiel wird die Rückumwandlung durch ein Kühlaggregat 13 veranlasst. Ein solches Kühlaggregat kann zum Beispiel aus einem Netz aus Schläuchen bestehen. Das Netz bietet zum einen eine große Kollisionsoberfläche, um einen Kondensationsnebel zu erzeugen bzw. zu verdichten. Zum anderen kann durch die Schläuche ein Transportmedium als Kühlmittel fließen, das die Kondensation an dem Netz unterstützt. Das Netz leitet das gewonnene Kondensat in Richtung des Fallrohrs 14 ab.

Das in den Schläuchen erwärmte Transportmedium kann über die Wärmerückführungsleitung 16 dem Verdampfungsraum 12 zugeführt werden, um dort den Effekt der eingespeisten Wärmeenergie zu unterstützen und dann in abgekühltem Zustand wieder dem Kühlaggregat 13 zugeführt zu werden (Schritt 23).

Das Trägermedium weist nun aufgrund der überwundenen Höhe h₁-h₀ eine eingeprägte potentielle Energie auf. Es wird durch das Fallrohr 14 nach unten fallen gelassen, so dass aus der potentiellen Energie kinetische Energie gewonnen wird (Schritt 24).

Diese kinetische Energie lässt sich nun in eine andere, gewünschte Energieform umwandeln (Schritt 25). Beispielsweise kann das fallende Trägermedium die Turbine 15 antreiben, und die entstehende Rotationsenergie kann dann genutzt werden, um den angeschlossenen Generator zu betreiben und elektrische Energie zu erzeugen.

Nachdem das Trägermedium die Turbine 15 angetrieben hat, kann es dann wieder in den Verdampfungsraum 12 geleitet werden (Schritt 26).

Das optionale Aufwindkraftwerk 17 kann den aufsteigenden Dampf aus dem Trägermedium zwischen Schritt 21 und Schritt 22 zusätzlich in konventioneller Weise zur Energiegewinnung nutzen.

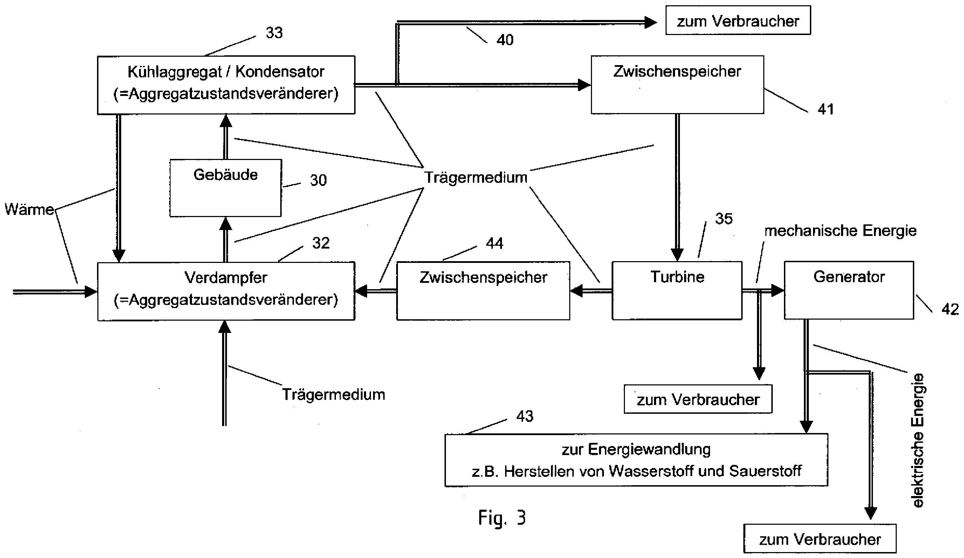

Einige ausgewählte Details und Variationsmöglichkeiten der Vorrichtung aus Figur 1 sind in dem in Figur 3 gezeigten Blockschaltbild dargestellt.

Einem Verdampfer 32, oder allgemeiner einem Aggregatszustandveränderer, wird ein Trägermedium zugeführt. Das Trägermedium kann beispielsweise Meerwasser sein. Der Verdampfer 32 entspricht dem Verdampfungsraum 12 in Figur 1. In dem Verdampfer 32 wird das Trägermedium mittels zugeführter Wärmeenergie verdampft.

Der Dampf steigt in dem Hohlraum eines Gebäudes 30 auf, bis es einen zweiten Aggregatszustandsveränderer 33 erreicht. Der Hohlraum kann zusätzlich ein Füllmedium enthalten, das in einem offenen oder einem geschlossenen Kreislauf von dem Trägermedium mitgenommen wird.

Der zweite Aggregatszustandsveränderer 33 kann beispielsweise dem Kühlaggregat 13 aus Figur 1 entsprechen, der als aktiver Kondensatsammer zur Unterstützung der Kondensierung eine Kühlung des Dampfes bewirken. Umfasst der Aggregatszustandsveränderer 33 ein Kühlaggregat, so erfolgt eine Wärmerückführung zu dem Verdampfer 32.

Alternativ kann der zweite Aggregatszustandsveränderer 33 ein Kondensator sein, der als passiver Kondensatsammler lediglich aus dem Dampf entstandenes Kondensat sammelt. In dem Fall ist die Höhe des Gebäudes vorteilhafterweise so bemessen, dass aufgrund der Abkühlung des Dampfes in der Aufwärtsbewegung eine Autokondensation in der Höhe des Kondensators erfolgt, beispielsweise an einem Netz, das der Kondensator zum Sammeln und Abführen von Kondensat umfassen kann.

Sollen Verdampfung und Kondensation gleichzeitig zur Destillation des Trägermaterials eingesetzt werden, so kann ein Teil des kondensierten Trägermediums über einen Entnahmeanschluss 40 direkt einem Verbraucher zugeführt werden. Ist das Trägermedium zum Beispiel Meerwasser, so fällen die enthaltenen Salze bei der Verdampfung aus, und ein Teil des kondensierten Trägermediums kann als Trinkwasser oder zur Bewässerung genutzt werden.

Der nicht entnommene Teil des kondensierten Trägermediums wird einem Zwischenspeicher 41 zugeführt, beispielsweise einem Wassertank, der ebenfalls im Wesentlichen auf der Höhe des zweiten Aggregatzustandsveränderers 33 angeordnet ist. Die Zwischenspeicherung erlaubt eine Gewinnung der gewünschten Energieform zu einer gewünschten Zeit. Dies schließt auch eine verstärkte Gewinnung der gewünschten Energieform zu Spitzenlastzeiten ein, und/oder eine zeitlich gleichmäßige Verteilung der Gewinnung der gewünschten Energieform, wenn die zugeführte Wärmeenergie etwa nur zu bestimmten Zeiten zur Verfügung steht und daher nur zu bestimmten Zeiten Kondensat gewonnen werden kann.

Das kondensierte Trägermedium wird dann bedarfsmäßig gesteuert durch ein Fallrohr fallengelassen, so dass es auf eine Turbine 35 auftritt und diese antreibt. Die von der Turbine 35 erzeugte Rotationsenergie kann entweder direkt von einem Verbraucher genutzt werden, und/oder einem Generator 42 zur Erzeugung elektrischer Energie zugeführt werden.

Die elektrische Energie kann wiederum entweder direkt einem Verbraucher zugeführt werden, oder aber für eine weitere Energieumwandlung 43, wie zur Herstellung von Wasserstoff oder Sauerstoff, eingesetzt werden.

Nachdem das kondensierte Trägermedium die Turbine 35 angetrieben hat, kann es in einem weiteren Zwischenspeicher 44 zwischengespeichert werden, um dann erneut in einem geschlossenen Kreislauf dem Verdampfer zugeführt zu werden. Es versteht sich, dass eine Entnahme von destilliertem Trägermedium über einen Entnahmeanschluss auch vor oder nach dem zweiten Zwischenspeicher 44 erfolgen kann, damit für das Antreiben der Turbine eine größere Menge an Trägermedium zur Verfügung steht.

Soweit dem Kreislauf kondensiertes Trägermedium entnommen wurde, wird es dem Verdampfer 32 zusätzlich von extern wieder zugeführt, zum Beispiel in Form von weiterem Meerwasser.

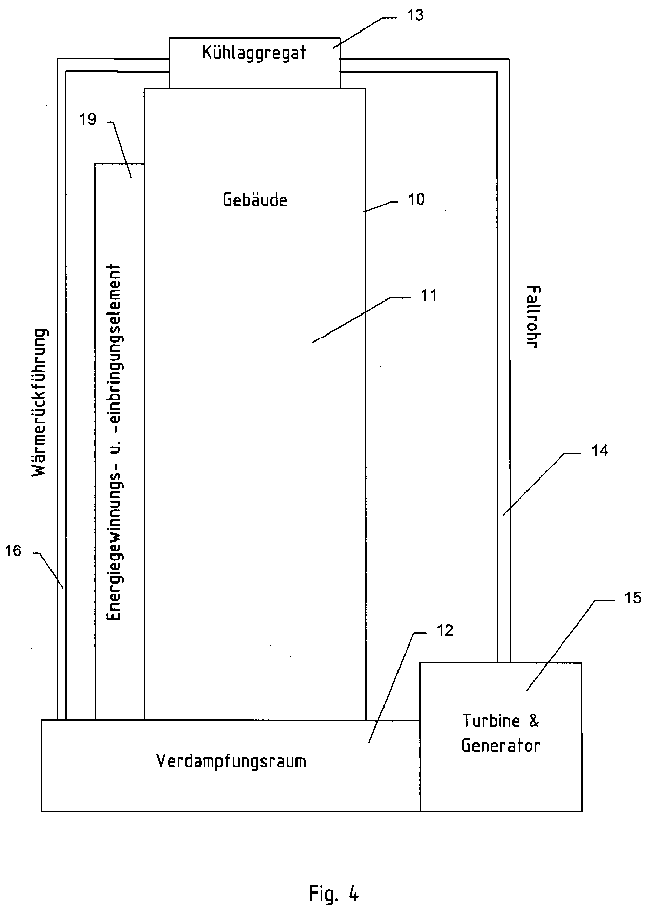

Figur 4 zeigt eine weitere Abwandlung der Vorrichtung aus Figur 1 als weiteres Ausführungsbeispiel einer erfindungsgemäßen Vorrichtung zur effizienten Umwandlung von Energie. Gleiche Komponenten wurden mit den gleichen Bezugszeichen wie in Figur 1 versehen.

In diesem Ausführungsbeispiel sind ein Verdampfungsraum 12, ein Gebäude 10 mit einem Hohlraum 11, ein Kühlaggregat 13, ein Fallrohr 14, eine Turbine 15 und eine Wärmerückführung 16 wiederum wie in dem Beispiel aus Figur 1 angeordnet.

In der Ausformung entsprechend Figur 4 ist jedoch ein Element 19 zur Wärmeenergiegewinnung und -einspeisung entlang der Hülle des Hohlraums angeordnet. Das Element 19 kann beispielsweise ein Solarkollektor sein. Das Element 19 bringt über die Höhe des Hohlraums verteilt Wärmeenergie in aufsteigendes, gasförmiges Trägermedium ein, so dass eine Autokondensation vor Erreichung des Kühlaggregats 13 gerade verhindert wird.

Dem Verdampfungsraum 12 muss dann nur so viel Energie zugeführt werden, wie für die Umwandlung des nicht-gasförmigen Trägermediums in ein gasförmiges Trägermedium erforderlich ist. Im laufenden Betrieb kann hierzu eventuell die über die Wärmerückführung 16 vom Kühlaggregat 13 rückgeführte Wärme ausreichen. Lediglich für die Inbetriebnahme muss dem Verdampfungsraum externe Wärme zugeführt werden, oder in den Hohlraum 11 wird bei Inbetriebnahme zunächst nicht-gasförmiges Trägermedium eingesprüht, so dass es zu Beginn erst in dem Hohlraum 11 selber in Dampf umgewandelt wird.

Darüber hinaus arbeitet die Vorrichtung aus Figur 4 wie die Vorrichtung aus Figur 1.

In anderen Worten lassen sich die Erfindung und einige Ausführungsformen wie folgt beschreiben:
Das Verfahren und / oder die Vorrichtung zum Gewinnen von Energie basiert auf dem Einsammeln und Umsetzen von Wärmeenergie über den Umweg des Gewinnens potentieller Energie im Schwerefeld einer Masse (*Eₚₒₜ* = *m*g*h; ,m'* die in die Höhe gehobene Masse in Kilogramm, ,*g'* die Gravitationskonstante und ,*h'* die Höhe) in Energie und / oder Energieträger, die wir Menschen zur Gestaltung unserer Umwelt benötigen oder zu benötigen glauben.

Die Physik, die hier zum Gewinnen von Energie ausgenutzt wird, ist gegeben durch das Einbringen von Energie in eine Änderung des Aggregatzustandes fest und / oder flüssig in den Aggregatzustand gasförmig und wieder zurück, sowie durch die Gasdynamik in Form der adiabatischen Expansion, die nach Änderung des Aggregatzustandes in die Gasform stattfindet. Aus der adiabatischen Expansion ergibt sich ein Kamineffekt, der in diesem Verfahren und / oder Vorrichtung eine Rolle spielt. Letztendlich ergibt sich daraus eine Wandlung von Energie in Form von Wärme in im Schwerefeld gespeicherte Energie, die dann wiederum in andere Energieformen umgewandelt werden kann und / oder wird.

Das Verfahren und / oder die Vorrichtung zum Gewinnen von Energie ist vom Grundprinzip her eine "Heat pipe" allerdings mit entscheidenden Veränderungen und Erweiterungen. Diese ist derart im Schwerefeld der Masse angeordnet, dass für eine Bewegung von ihrem einen Ende zu ihrem anderen Ende (= Höhe h) Energie für die Überwindung einer Differenz im Potential des Schwerefeldes aufgewandt werden muss. Beispielhaft übertragen auf den Fall ,Erde' bedeutet dies: Das eine Ende befindet sich z.B. auf dem Erdboden (Höhe *h₀* = 0) und das andere Ende befindet sich in einer Höhe *h₁* > 0 über dem Erdboden.

Das funktionale Grundprinzip nach dem das Verfahren und / oder die Vorrichtung zum Gewinnen von Energie abläuft lässt sich wie folgt beschreiben (Fig.3): Ein Stoff (= Trägermedium) wird mittels von außen eingeprägter Energie in den gasförmigen Aggregatzustand überführt, dann durch den die tragende Rolle spielenden physikalischen Effekt der adiabatischer Expansion auf die Höhe h gefördert und dort in den vorhergehenden Aggregatzustand zurückversetzt (=kondensiert). Danach steht der Stoff mit eingeprägter potentieller Energie für die Energiegewinnung zur Verfügung. Optional kann er dort in dieser Höhe für eine spätere Nutzung zwischengespeichert werden. Die potentielle Energie kann dann mittels entsprechender Vorrichtungen und / oder Verfahren in andere physikalische wie chemische Energieformen umgewandelt werden, d.h. dem Trägermedium entnommen werden. Nach der Entnahme der potentiellen Energie kann der Stoff optional wiederum zwischengespeichert werden. Danach kann dann optional, wenn in der entsprechenden Ausführungsform geplant, das Trägermedium in den Kreislauf wieder eingespeist werden.

Zur Umsetzung des Verfahrens und / oder der Vorrichtung zum Gewinnen von Energie wird in einer Ausführung ein Kreislauf mit folgenden Elementen dargestellt (siehe auch Fig.1) :
Ein Verdampfungsraum zum Verdampfen eines Trägermediums mittels der eingeprägten äußeren Wärme, daran angeschlossen ein Gebäude einer Höhe h, in dem der Dampf aufsteigen kann und in das auch ein Aufwindkraftwerk eingefügt werden kann, daran angeschlossen in einer Ausführungsform ein Kühlaggregat (=eine Kühlvorrichtung) zum Gewinnen von Kondensat aus dem Dampf des Trägermediums, in einer anderen Ausführungsform wird die Höhe *h* so ins Verhältnis zu der in das Trägermedium eingeprägten Wärme gesetzt, dass die Abkühlung durch die Aufwärtsbewegung (das ist der physikalische Vorgang des Umwandelns der Wärme (= mikroskopische Bewegung) in die makroskopische Bewegung, das ist die gleichgerichtete Bewegung der Moleküle/Atome - der Kamineffekt) einen soweit unterkühlten Dampf generiert, dass im besten Fall Autokondensation einsetzt und ein Kühlaggregat nicht nötig ist, daran schließt / schließen sich dann in einer Ausführung Kondensatsammler / Kondensatoren z.B. in Form von Netzen an, die als große Kollisionsoberfläche dienen, um einen Kondensationsnebel / Kondensat zu erzeugen bzw. weiter zu verdichten, daran nicht notwendigerweise angeschlossen eine Zwischenspeichervorrichtung für das Kondensat (notwendig z.B. für den Fall des Ausbleibens der äußeren Wärme, oder aber um Spitzenabforderungen abzudecken, oder aber um Spitzen in der Kondensatzulieferung abzupuffern), daran angeschlossen ein Fallrohr für das Kondensat, daran angeschlossen eine Turbine mit angeschlossenem Generator, in der die aus der potentiellen Energie des Kondensats des Trägermediums über den Fall im Fallrohr gewonnene kinetische Energie in z.B. elektrische Energie umgesetzt werden kann (kann wiederum auch direkt in Wärme umgewandelt werden), daran nicht notwendigerweise angeschlossen eine weitere Zwischenspeichervorrichtung für das Kondensat, und daran angeschlossen wieder der Verdampfungsraum. Hierbei kann die im Kühlaggregat anfallende Wärme wiederum über ein Transportmedium in die Aufheizung im Verdampfungsraum eingebracht werden.

Zur Umsetzung des Verfahrens und / oder der Vorrichtung zum Gewinnen von Energie sind verschiedene Ausführungen möglich. In dem bisher beschriebenen Verfahren und / oder Vorrichtung ist das Trägermedium nicht notwendigerweise bis auf Verunreinigungen das einzige Gas innerhalb des Gebäudes der Höhe h, in einer weiteren Ausführung ist das Gebäude der Höhe h zusätzlich mit einem Füllmedium (vornehmlich Luft, aber auch jegliches andere Gas / Gasgemisch ist nutzbar) geflutet. Die Option eines Füllmediums ergibt sich durch Druckunterschiede zwischen den Innenräumen des Verfahrens und / oder der Vorrichtung und der äußeren Umgebung bei verschiedenen Betriebstemperaturen, welche durch Änderungen von Aggregatzuständen hervorgerufen werden. Diese können optional durch Füllmedien ausgeglichen werden, woraus sich konstruktive Maßnahmen für das Auslegen der baulichen Objekte ergeben. Hieraus ergeben sich nun, da das Füllmedium durch das Trägermedium mitgenommen wird, mindestens zwei Ausführungen. Zum einen ein geschlossener Kreislauf für das Füllmedium, welches durch eine Rückführungsvorrichtung nach Entfernen des Trägermediums in der Höhe *h* wieder im Verdampfer zur Verfügung gestellt wird und zum anderen ein offenes System, wo das Füllmedium von außen durch die Mitnahme innerhalb des Gebäudes angesaugt wird und nach Nutzen wieder nach außen entlassen wird.

Aus weiterem Betrachten des Verfahrens und / oder der Vorrichtung zum Gewinnen von Energie ergibt sich ein weiterer Nutzen. Als Nebeneffekt des Änderns des Aggregatzustandes eines genutzten Stoffes ergibt sich je nach Zusammensetzung desselben eine fraktionierte Destillation. Wird z.B. Meereswasser als Trägermedium in einem offenen Durchlauf in dem Verfahren und / oder der Vorrichtung zum Gewinnen von Energie eingesetzt, so verdampft vereinfacht dargestellt Wasser, gelöste Gase werden frei und Salze fällen aus. Im Kondensationsbereich in der Höhe h steht dann vornehmlich reines Wasser zur Verfügung, welches ja mittels der gewonnenen Energie bereits ohne weitere Zwischenschritte auf die Höhe h gepumpt wurde. Hieraus ergeben sich wieder vielfältige Anwendungen und Ausführungen (Stichworte: (Trink-) Wassergewinnung, Bewässerung). Wird z.B. Brauchwasser oder Abwasser aus Industrie oder Haushalten genommen, so resultiert das Verfahren in einer Brauchwasser oder Abwasserreinigung, sowie einer Gewinnung der Reststoffe.

In weiteren Ausführungsformen wird optional speziell auf die Verdampfungswärme oder Verdampfungsenthalpie des jeweiligen Trägermediums eingegangen, die als latente Wärme bei der Aggregatzustandsänderung von flüssig / fest nach gasförmig aufgebracht werden muss, dann aber beim reversen Übergang bezeichnet mit Sublimations- oder Kondensationswärme wieder frei wird. Selbige wird optional durch den oben bereits beschriebenen Rücktransport mittels Kühlaggregat wieder in den Bereich der Aggregatzustandsänderung von flüssig / fest nach gasförmig eingebracht (s. Fig.3). Dies führt dazu, dass während des Betriebes von außen in den Verdampfer nur die Verlustenergien zusätzlich eingebracht werden müssen. Dazu gehört ja auch die entnommene Nutzenergie. Insgesamt haben diese Ausführungsformen den Vorteil eines deutlich kleineren baulichen Aufwandes für das Gewinnen der Energie.
In einer weiteren Ausführungsform werden die oben genannten Netze durch konstruktive Auslegung und Anordnung von den Kühlbereichen des Kühlaggregats dargestellt, wie z.B. Netze aus Schläuchen, durch die ein Kühlmittel (=Transportmedium) fließt.

In einer weiteren Ausführungsform wird die Rückgewinnung der Verdampfungswärme und damit die Kondensation durch einsprühen / einregnen / einbringen des Kondensats, welches in einer weiteren Ausführungsform vorher durch das Kühlaggregat gekühlt wurde, verbessert. In weiteren Ausführungsformen kann das Kondensat auch durch Stoffe, die den selben physikalischen Effekt bewirken ersetzt werden. (Beispiel: Im Fall eines Trägermediums Wasser könnte der eingebrachte Stoff zur Verbesserung der Kondensation auch ein Öl sein. Dies hätte den Vorteil einer einfachen Separation beider Stoffe.).

Für alle Stoffe (Trägermedium(en), Transportmedium(en)), Füllmedium(en), Energien (Wärme(en), elektrische Energie(en), mechanische Energie(en), Wind(e), Bewegungsenergie(en)) und Aggregatzustände im Verfahren und / oder der Vorrichtung zum Gewinnen von Energie bieten sich konstruktive Lösungen mit geschlossenen Kreisläufen, wie offenen Durchläufen an.

Die Transportmedien, die in diesem Verfahren und / oder Vorrichtung genutzt werden, erfüllen, wie z.B. Katalysatoren in chemischen Reaktionen, nur funktionale Hilfsaufgaben, die aber wiederum für die Darstellung der jeweiligen Ausführungsform funktional notwendig sind. Z.B. wird die Rückführung der im Kühlaggregat gewinnbaren Wärme über einen optional geschlossenen Kreislauf eines Transportmediums zurück in den Verdampfer organisiert. Auch kann das Transportmedium in diesem Prozess einem Wechsel des Aggregatzustandes unterliegen, muss dies aber nicht. Dies wäre der Fall, wenn dieser Teil einer Ausführungsform ebenso als "Heat pipe" ausgeführt wird. In einer anderen Ausführungsform wird als Wärmetransportmedium, z.B. eine höher siedende Flüssigkeit (z.B. pflanzliches oder mineralisches Öl, eine Salzschmelze o.ä.), ein Gas eingesetzt, das seinen Aggregatzustand unter Einbringung der im Kühlaggregat gewonnenen Wärme nicht ändert.

Die Wärmeenergie, die dieses Verfahren und / oder die Vorrichtung antreibt, kann aus beliebigen Quellen entnommen werden. So z.B. Erde (Erdwärme), Wasser (Wärme des Wassers), Luft (Wärme der Luft), Fossile Energieträger (Gas, Öl, Kohle, Methaneis etc.), Kernenergieträger (Fusion oder Spaltung) oder Sonne (Sonnenenergie).

In weiteren Ausführungsformen fällt das Gebäude der Höhe h (=der Kamin) mit der Vorrichtung zur Energie- / Wärmegewinnung zusammen, was den Aufwand und damit die Bau- und Erschließungskosten drastisch senkt. Physikalisch / technischer Hintergrund dazu ist die Überlegung, dass die zum Höhentransport mittels Kamineffekt notwendige Energie für das Trägermedium ja nicht unbedingt bereits im Verdampfungsraum (Fig. 1) also konzentriert (Folge: hohe Temperaturen nötig) eingebracht werden muss, sondern auch verteilt über den Höhenverlauf des Gebäudes der Höhe h eingebracht werden kann (Folge: nur niedrige Temperaturen nötig. D.h. nur so viel pro Höhenmeter heizen wie unbedingt nötig). Wird also die Vorrichtung zur Energie- / Wärmegewinnung z.B. im Falle eines Solarkollektors derart ausgeführt, so fallen Kollektor und Gebäude der Höhe h zusammen. In jedem anderen Fall, in dem ebenso nur niedrige Ausgangstemperaturen für die Verdampfungs- bzw. Transportenergien vorliegen gilt analoges. Also ergibt sich auch für diese Ausführungsformen der grundlegende Verfahrensablauf mit den folgenden Stationen: Die des Verdampfens - mit nicht notwendigerweise genügender Transportenergie zum überbrücken der Höhe h, die des Gewinnens und Einbringens von Energie (Wärme) zwecks des Transports des Trägermediums zum Gewinnen der potentiellen Energie und ausgleichen der Verluste (Das Trägermedium erfüllt hier auch gleichzeitig die Funktion eines Transportmediums für einen möglicherweise temporär überschüssigen Energiegewinn), die des Kondensierens und Rückgewinnens latenter Energien (selbige latente Energien sind die Verdampfungswärme, wie auch die Wärme des Trägermediums) nach erreichen der Höhe h, selbige werden dann wieder in die Verdampfung eingespeist, wie auch die des Gewinnens der Nutzenergie und die des Rückführens des Trägermediums in den Verdampfer. Auch hier sind alle bereits oben genannten Ausführungen Zwecks Gewinnen von Trinkwasser oder Abwasserreinigung etc., sowie offene und / oder geschlossene Kreisläufe möglich (siehe auch Fig. 3).

Die Energie und / oder Energieträger, die wir Menschen zur Gestaltung unserer Umwelt benötigen oder zu benötigen glauben, können z.B. elektrische Energie oder chemische Energieträger oder physikalische Energieträger wie z.B. Wasserstoff und Sauerstoff aus einer Elektrolyse sein, oder auch Pumpenergie, wie Energie zur Destillation.

Vorteil dieses Verfahrens und / oder der Vorrichtung zum Gewinnen von Energie ist im Falle des Nutzens der Eingangsenergieträger wie Erdwärme, Wärme der Luft oder des Wassers sowie der Sonnenenergie die absolute Emissionsfreiheit an den die Umwelt verschmutzenden Stoffen.

Zur Abgrenzung:
- Das hier vorgestellte Verfahren und / oder die Vorrichtung zum Gewinnen von Energie ist kein Aufwindkraftwerk (Aufwindkraftwerke gehören zur Gruppe der Thermikkraftwerke, so wie dieses hier vorgestellte Verfahren und / oder die Vorrichtung zum Gewinnen von Energie). Ein Aufwindkraftwerk ist ein nicht notwendiger Bestandteil dieses hier vorgestellten Kraftwerks.
- Das hier vorgestellte Verfahren und / oder die Vorrichtung zum Gewinnen von Energie ist kein Meereswärmekraftwerk. Die Wärme des Meerwassers ist lediglich eine Lösung zur Gestaltung der Energiequelle.
- Das hier vorgestellte Verfahren und / oder die Vorrichtung zum Gewinne von Energie ist kein Geothermiekraftwerk. Die Wärme der Erde ist lediglich eine weitere Lösung zur Gestaltung der Energiequelle.

Im Fall der Nutzung von Erdwärme als Quellenergie kann daran gedacht werden, bestehende Schachtanlagen - z.B. im Ruhrgebiet - zu nutzen. Damit ließen sich die Anfangskosten für die Entwicklung minimieren und zugleich die Bauzeit bis zur ersten Inbetriebnahme verkürzen. Dabei würde die Wärmegewinnung z.B. in den Stollen geschehen und die Schächte wären die Gebäude der Höhe h, und ebenerdig besteht dann zusätzlich die Möglichkeit eines Speichersees für das Kondensat, was als Funktion "Speicherkraftwerk" zur Steuerung und Bedienung der Spitzenlastverteilung dienen kann.

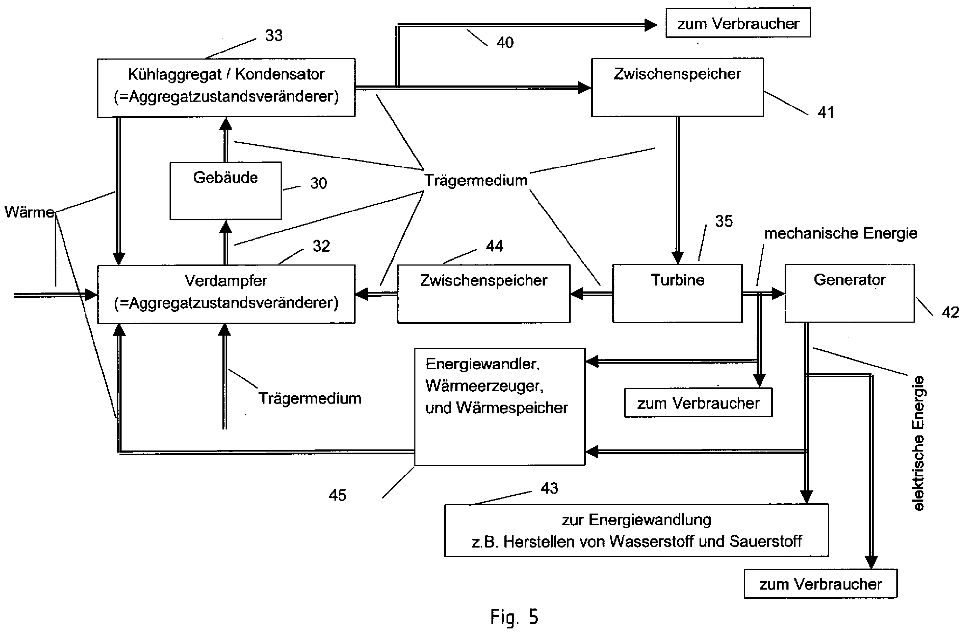

Figur 5 veranschaulicht schematisch den Aufbau einer weiteren erfindungsgemäßen Vorrichtung. Die Vorrichtung entspricht der mit Bezug auf Figur 4 beschriebenen Vorrichtung. Es wurde jedoch ein Element zur Energiewandlung, Wärmeerzeugung und Wärmespeicherung 45 - angeordnet zwischen Turbine 35 und/oder Generator 42 einerseits und Verdampfer 32 andererseits - ergänzt. Eine solche Vorrichtung ist beispielhaft für folgende Ausführungen:
In einer weiteren Ausführungsform des Verfahrens und / oder der Vorrichtung von Energie wird die durch das Verfahren und / oder Vorrichtung gewonnene Energie in Form von Wärme in einen Speicher eingebracht (Fig. 5)(45). Daraus ist die Wärme bei Bedarf wieder in den Energiegewinnungskreislauf einbringbar. Dieser Wärmespeicher kann als Speichermedium in diversen Ausführungsformen z.B. Eisen oder ein anderes Metall haben oder aber einfach aus Stein (z.B. Basalt, Granit, Marmor, Schamott etc.), oder aber aus einer Flüssigkeit wie z.B. einer Salzlake, einer Salzschmelze oder aber einer Metallschmelze bestehen.

Vorteil dieser Art der Zwischenspeicherung ist die erreichbare viel höhere Energiedichte im Vergleich zur Speicherung von Trägermedium und damit Gewicht auf großer Höhe und daraus ergibt sich ein deutlich geringerer Aufwand. Zugleich ergibt sich dadurch die Möglichkeit der permanenten Wärmezufuhr in den Verdampfungsprozess, was in einigen Ausführungsformen dazu führt, dass kein Unterdruck im Gebäude entsteht; auch dies ergibt etliche bauliche Vorteile.

Am Beispiel von 365 Wärmespeichern aus Basalt (0,84 kJ/kg*K, 3000 kg/m³), die um 600°C erwärmt werden und ein Volumen von jeweils 300x300x300 m³ haben zeigt sich die Kapazität dieses Verfahrens. Die hierin gespeicherte Wärmemenge ergibt sich zu 15.000 Peta Joule, was aufgerundet dem Jahresbedarf der Bundesrepublik Deutschland an Primärenergie im Jahr 2005 entspricht. Diese Wärmemenge ist mittels des hier dargestellten Verfahrens und / oder der Vorrichtung zum Gewinnen von Energie erzeugbar und wieder abrufbar zwecks Nutzung in anderen Energieträgern.

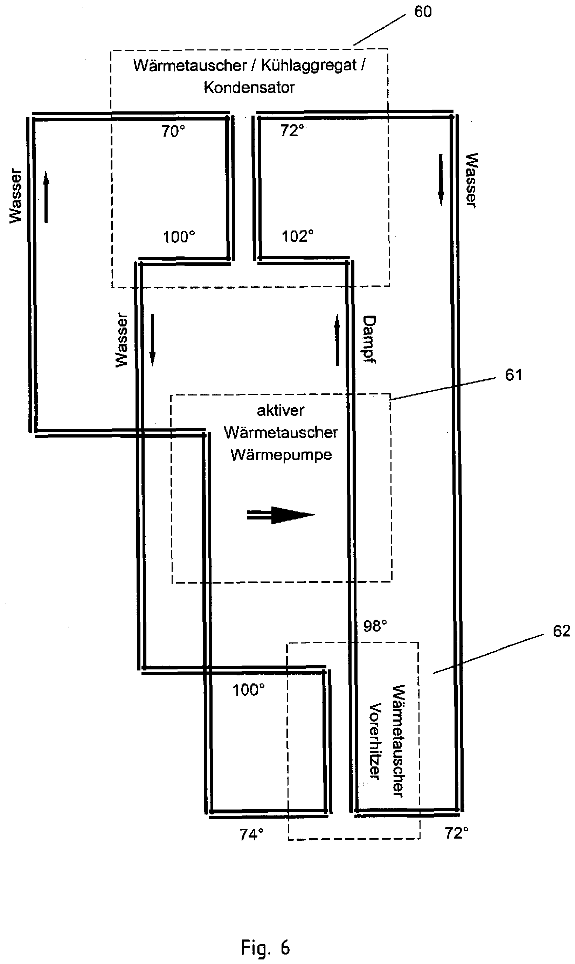

In einer weiteren Ausführungsform des Verfahrens und / oder der Vorrichtung zum Gewinnen von Energie wird der Wärmerücktransport, wie das erneute Einbringen der Verdampfungswärme und optional auch das erneute Einbringen der Grundwärme des Trägermediums, durch jeweils einen Wärmetauscher realisiert. Diese sind jeweils über Leitungen sinnvoll miteinander verbunden (Fig. 6). Also: Der eine Wärmetauscher sammelt die Energien aus dem Dampf bzw. dem Kondensat des Trägermediums ein - dieser ist das Kühlaggregat - und überträgt diese in das Transportmedium. Der Andere gibt diese eingesammelte Energie im Verdampfer wieder an das Trägermedium zwecks verdampfen ab - dieser ist dann der Verdampfer. Diese Wärmetauscher können in verschiedenen Ausführungsformen passiv (= Gegenstrom-, Mitstrom-, Kreuzstromwärmetauscher) und/oder aktiv (= Wärmepumpe) sein. Erfindungsgemäß wird die durch die Kühlung des Trägermediums erfolgte Erwärmung des Transportmediums genutzt, um mittels einer Wärmepumpe einen Beitrag zu der eingebrachten Wärmeenergie zu liefern. Wenn in einer Ausführungsform für den Wärmetransport bevorzugt passive Wärmetauscher eingesetzt werden, dann muss, da passive Wärmetauscher nicht ideal sind, in einer Ausführungsform mindestens ein weiterer aktiver Wärmetauscher für die Übertragung der von den passiven Wärmetauschern nicht übertragenen Restwärme zwecks Übertragung dieser in den Verdampfungsprozess integriert werden, oder aber es wird in einer weiteren Ausführungsform diese Restwärme durch einen Wärmetauscher an die Umgebung des Verfahrens und / oder der Vorrichtung zum Gewinnen von Energie abgegeben und muss dann durch eine um diesen Betrag vergrößerte externe Energiezufuhr in den Verdampfungsprozess wieder ausgeglichen werden. Das integrieren dieses aktiven Wärmetauschers geschieht sinnvoller, aber nicht notwendigerweise am Ort des Verdampfers, wo die Übertragungswege dieser Restwärme in den Verdampfungsprozess kurz sind.

Ein Beispiel (Fig.6) verdeutlicht den Wärmefluss: Angenommen die Wärmetauscher sind Gegenstromwärmetauscher und Träger- wie Transportmedium ist Wasser und die Vorlauftemperatur des Transportmediums in den Kühler (60) beträgt 70°C und die Abströmtemperatur 100°C, die Temperatur des Dampfes des Trägermediums am Vorlauf des Gegenstromes 102°C und am Abstrom 72°C, so beträgt die Vorlauftemperatur des Transportmediums in den Verdampfer 100°C und die wiederum trifft auf ein Trägermedium von 72°C. Sei nun dieser passive Gegenstromwärmetauscher des Verdampfers (62) ähnlich dem des Kühlers ausgelegt. Dann liegt am Abstrom ein Trägermedium von 98°C vor und ein Transportmedium von 74°C. Zugleich kann dieser passive Wärmetauscher aber nur einen Bruchteil der im Transportmedium zwischengespeicherten Energie abführen und so muss, um für den Kühler wieder die für den Betrieb notwendige Vorlauftemperatur von 70°C zu erreichen die restliche Wärme aktiv abgeführt und damit die Temperatur des Transportmediums noch um 4°C gesenkt werden. Dies geschieht dann mittels einer Wärmepumpe (61) (= Prinzip des Kühlschranks) wobei die Wärme sinnvollerweise derart gepumpt wird, dass sie wieder zwecks Verdampfen in den Verdampfungsprozess einfügbar ist.

Es versteht sich, dass die beschriebenen Ausführungsformen lediglich Beispiele sind, die im Rahmen der Ansprüche auf vielfältige Weise modifiziert und/oder ergänzt werden können.

## Patentansprüche

1. Verfahren zur Umwandlung von Energie umfassend:
a) Umwandeln (21) eines nicht-gasförmigen Trägermediums in ein gasförmiges Trägermedium durch Einbringen von Wärmeenergie, so dass das gasförmige Trägermedium aufsteigt und eingebrachte Wärmeenergie in potentielle Energie umgewandelt wird;
b) Rückumwandeln (22) des gasförmigen Trägermediums auf einer vorgegebenen Höhe in ein nicht-gasförmiges Trägermedium durch Kühlung des gasförmigen Trägermediums mittels eines Transportmediums;
c) Umwandeln (24, 25) der potentiellen Energie des rückgewonnenen nicht-gasförmigen Trägermediums in eine andere Energieform; und
d) Nutzen (23) einer durch die Kühlung des Trägermediums erfolgte Erwärmung des Transportmediums, um mittels einer Wärmepumpe (61) einen Beitrag zu der eingebrachten Wärmeenergie zu liefern.

2. Verfahren nach Anspruch 1, wobei des weiteren Wärmeenergie verteilt über die Höhe, die das gasförmige Trägermedium überwindet, in das Trägermedium eingebracht wird.

3. Verfahren nach Anspruch 1 oder 2, wobei die eingebrachte Wärmeenergie aus Erdwärme, Wasserwärme, Luftwärme, einem fossilen Energieträger, einem Kernenergieträger und/oder Sonnenenergie gewonnen wird.

4. Verfahren nach einem der Ansprüche 1 bis 3, wobei die Kühlung dadurch erfolgt, dass ein Transportmedium durch in der vorgegebenen Höhe angeordnete Kühlbereiche (13; 33) geleitet wird.

5. Verfahren nach einem der Ansprüche 1 bis 4, wobei zur Unterstützung der Rückumwandlung ein Stoff unmittelbar in das Trägermedium eingebracht wird.

6. Verfahren nach einem der Ansprüche 1 bis 5, wobei das rückgewonnene nicht-gasförmiges Trägermedium vor der Umwandlung der gewonnenen potentiellen Energie des Trägermediums in eine andere Energieform zwischengespeichert wird.

7. Verfahren nach einem der Ansprüche 1 bis 6, wobei zur Umwandlung der potentiellen Energie des Trägermediums in eine andere Energieform die potentielle Energie zunächst in kinetische Energie umgewandelt wird (24) durch Fallenlassen des rückgewonnenen nicht-gasförmigen Trägermediums von einer höheren Höhe auf eine niedrigere Höhe und dann die kinetische Energie in eine andere Energieform umgewandelt wird (25).

8. Verfahren nach einem der Ansprüche 1 bis 7, wobei die potentielle Energie umgewandelt wird in mechanische Energie, in elektrische Energie, in Energie zur Erzeugung eines chemischen Energieträgers und/oder in Energie zur Erzeugung eines physikalischen Energieträgers.

9. Verfahren nach einem der Ansprüche 1 bis 8, wobei das rückgewonnene nicht-gasförmige Trägermedium nach Umwandlung der potentiellen Energie in eine andere Energieform zwischenspeichert wird.

10. Verfahren nach einem der Ansprüche 1 bis 9, wobei das rückgewonnene nicht-gasförmige Trägermedium nach der Umwandlung der potentiellen Energie in eine andere Energieform zumindest teilweise in einem geschlossenen Kreislauf, der sich mit Schritt a) fortsetzt, weiter eingesetzt wird.

11. Verfahren nach einem der Ansprüche 1 bis 10, wobei das nicht-gasförmigen Trägermediums in Schritt a) durch das Umwandeln in ein gasförmiges Trägermedium destilliert wird, und wobei das destillierte, rückgewonnene nicht-gasförmigen Trägermediums vor oder nach der Umwandlung der potentiellen Energie in eine andere Energieform zumindest teilweise entnommen wird.

12. Verfahren nach einem der Ansprüche 1 bis 11, wobei das gasförmige Trägermedium in einem Hohlraum (11) aufsteigt, der ein Füllmedium umfasst, das von dem Trägermedium mitgenommen wird.

13. Verfahren nach einem der Ansprüche 1 bis 12, wobei zur Umwandlung der potentiellen Energie des Trägermediums in eine andere Energieform das rückgewonnene nicht-gasförmige Trägermedium von einer höheren Höhe auf eine niedrigere Höhe fallengelassen wird, um auf der niedrigeren Höhe eine Turbine (15; 35) anzutreiben.

14. Vorrichtung zur Umwandlung von Energie umfassend:
- einen Hohlraum (11);
- einen am unteren Ende des Hohlraums (11) angeordneten Aggregatzustandsveränderer (12; 32), ausgeformt zum Umwandeln eines nicht-gasförmigen Trägermediums in ein gasförmiges Trägermedium durch Einbringen von Wärmeenergie, so dass das Trägermedium in dem Hohlraum (11) aufsteigt und eingebrachte Wärmeenergie in potentielle Energie umgewandelt wird;
- einen am oberen Ende des Hohlraums (11) angeordneten Sammler, ausgeformt zum Sammeln eines aus dem gasförmigen Trägermedium rückgewonnenen nicht-gasförmigen Trägermediums, wobei der Sammler ein Kühlaggregat (13; 33; 60) aufweist, das dazu ausgeformt ist, für eine Kühlung des gasförmigen Trägermediums von einem Transportmedium durchströmt zu werden, um das gasförmige Trägermedium in ein nicht-gasförmiges Trägermedium rückumzuwandeln;
- eine Energiewandlungsanordnung (14, 15; 35, 42) ausgeformt zum Umwandeln der potentiellen Energie des rückgewonnenen nicht-gasförmigen Trägermediums in eine andere Energieform; und
- eine Wärmerückführungsleitung (16), die dazu angeordnet ist, das durch die Kühlung des Trägermediums erwärmte Transportmedium zu nutzen, um mittels einer Wärmepumpe (62) einen Beitrag zu der eingebrachten Wärmeenergie zu liefern.

15. Vorrichtung nach Anspruch 14, ferner umfassend ein Energieeinbringungselement (19) angeordnet zum Einbringen von Wärmeenergie verteilt über die Höhe des Hohlraums.

16. Vorrichtung nach Anspruch 14 oder 15, ferner umfassend ein Energiegewinnungselement (18), ausgeformt zum Gewinnen der eingebrachten Wärmeenergie aus Erdwärme, Wasserwärme, Luftwärme, fossile Energieträger, Kernenergieträger und/oder Sonnenenergie.

17. Vorrichtung nach einem der Ansprüche 14 bis 16, wobei das Kühlaggregat (13; 33; 60) Kühlbereiche aufweist, die für die Kühlung des gasförmigen Trägermediums von einem Transportmedium durchströmt werden.

18. Vorrichtung nach einem der Ansprüche 14 bis 17, wobei der Sammler (13) Mittel aufweist zum Einbringen eines Stoffes unmittelbar in das Trägermedium zur Unterstützung der Rückumwandlung des gasförmigen Trägermediums in ein nicht-gasförmiges Trägermedium.

19. Vorrichtung nach einem der Ansprüche 14 bis 18, ferner umfassend einen Zwischenspeicher (41) ausgeformt zum Zwischenspeichern des rückgewonnenen nicht-gasförmigen Trägermediums vor der Umwandlung der potentiellen Energie des Trägermediums in eine andere Energieform.

20. Vorrichtung nach einem der Ansprüche 14 bis 19, wobei die Energiewandlungsanordnung (14, 15) einen Fallweg (14) umfasst, angeordnet zum Umwandeln der potentiellen Energie in kinetische Energie durch Fallenlassen des rückgewonnenen nicht-gasförmigen Trägermediums von einer höheren Höhe auf eine niedrigere Höhe, sowie einen Energiewandler (15) ausgeformt zum Umwandeln der kinetischen Energie in eine andere Energieform.

21. Vorrichtung nach einem der Ansprüche 14 bis 20, wobei die Energiewandlungsanordnung (14, 15) ausgebildet ist, die potentielle Energie des rückgewonnenen nicht-gasförmigen Trägermediums in mechanische Energie, in elektrische Energie, in Energie zur Erzeugung eines chemischen Energieträgers oder in Energie zur Erzeugung eines physikalischen Energieträgers umzuwandeln.

22. Vorrichtung nach einem der Ansprüche 14 bis 21, ferner umfassend einen Zwischenspeicher (44) ausgeformt zum Zwischenspeichern des rückgewonnenen nicht-gasförmigen Trägermediums nach der Umwandlung der potentiellen Energie in eine andere Energieform.

23. Vorrichtung nach einem der Ansprüche 14 bis 22, wobei die Energiewandlungsanordnung (14, 15) so angeordnet ist, dass das rückgewonnene nicht-gasförmige Trägermedium nach der Umwandlung der potentiellen Energie in eine andere Energieform wieder dem am unteren Ende des Hohlraums (11) angeordneten Aggregatzustandsveränderer (12) zugeführt wird.

24. Vorrichtung nach einem der Ansprüche 14 bis 23, wobei das nicht-gasförmige Trägermedium durch das Umwandeln in ein gasförmiges Trägermedium destilliert wird, ferner umfassend einen Entnahmeanschluss (40), ausgeformt zum zumindest partiellen Entnehmen des rückgewonnenen nicht-gasförmigen Trägermediums vor oder nach der Umwandlung der potentiellen Energie in eine andere Energieform.

25. Vorrichtung nach einem der Ansprüche 14 bis 24, wobei der Hohlraum (11) ein Füllmedium umfasst, das von dem Trägermedium mitgenommen wird.

26. Vorrichtung nach einem der Ansprüche 14 bis 25, wobei die Energiewandlungsanordnung (14, 15) einen Fallweg (14) umfasst, ausgebildet zum Ermöglichen eines Fallenlassens des rückgewonnenen nicht-gasförmigen Trägermediums von einer höheren Höhe auf eine niedrigere Höhe, und wobei die Energiewandlungsanordnung (14, 15) eine Turbine (15) umfasst, die auf der niedrigeren Höhe angeordnet ist und die ausformt ist durch fallendes Trägermedium angetrieben zu werden.

## Claims

1. Method for converting energy, comprising:
a) conversion (27) of a non-gaseous carrier medium into a gaseous carrier medium by the introduction of thermal energy, so that the gaseous carrier medium rises and introduced thermal energy is converted into potential energy;
b) back-conversion (22) of the gaseous carrier medium at a specified height into a non-gaseous carrier medium by cooling the gaseous carrier medium via a transport medium;
c) conversion (24, 25) of the potential energy of the recovered non-gaseous carrier medium into another energy form; and
d) utilizing (23) a heating of the transport medium resulting from the cooling of the carrier medium to make a contribution, by means of a heat pump (61), to the thermal energy introduced.

2. Method according to Claim 1, wherein furthermore thermal energy is introduced into the carrier medium distributed over the height travelled by the gaseous carrier medium.

3. Method according to Claim 1 or 2, wherein the introduced thermal energy is recovered from geothermal heat, water heat, air heat, a fossil energy carrier, a nuclear energy carrier and/or solar energy.

4. Method according to any of Claims 1 to 3, wherein the cooling takes place in that a transport medium is passed through cooling areas (13; 33) arranged at the specified height.

5. Method according to any one of Claims 1 to 4, wherein to support the back conversion a substance is introduced directly into the carrier medium.

6. Method according to any one of Claims 1 to 5, wherein the recovered non-gaseous carrier medium is temporarily stored before conversion of the recovered potential energy of the carrier medium into another energy form.

7. Method according to any one of Claims 1 to 6, wherein to convert the potential energy of the carrier medium into another energy form, the potential energy is firstly converted into kinetic energy (24) by dropping the recovered non-gaseous carrier medium from a greater height to a lesser height and then the kinetic energy is converted into another energy form (25).

8. Method according to any one of Claims 1 to 7, wherein the potential energy is converted into mechanical energy, electrical energy, energy to generate a chemical energy carrier and/or energy to generate a physical energy carrier.

9. Method according to any one of Claims 1 to 8, wherein the recovered non-gaseous carrier medium is temporarily stored after conversion of the potential energy into another energy form.

10. Method according to any one of Claims 1 to 9, wherein the recovered non-gaseous carrier medium, after conversion of the potential energy into another energy form, is used further at least partly in a closed circuit which continues with step a).

11. Method according to any one of Claims 1 to 10, wherein the non-gaseous carrier medium is distilled in step a) by conversion into a gaseous carrier medium, and wherein the distilled recovered non-gaseous carrier medium is at least partly extracted before or after conversion of the potential energy into another energy form.

12. Method according to any one of Claims 1 to 11, wherein the gaseous carrier medium rises in a cavity (11) comprising a filling medium that is carried along by the carrier medium.

13. Method according to any one of Claims 1 to 12, wherein to convert the potential energy of the carrier medium into another energy form, the recovered non-gaseous carrier medium is dropped from a greater height to a lesser height to drive a turbine (15; 35) arranged at the lesser height.

14. Device for conversion of energy, comprising:
- a cavity (11);
- an aggregation state changer (12; 32) arranged at the lower end of the cavity (11) and configured to convert a non-gaseous carrier medium into a gaseous carrier medium by the introduction of thermal energy so that the carrier medium rises in the cavity (11) and introduced thermal energy is converted into potential energy;
- a collector arranged at the upper end of the cavity (11) and configured to collect a non-gaseous carrier medium recovered from the gaseous carrier medium, wherein the collector has a cooling unit (13; 33; 60) that is configured for through-flow of a transport medium to cool the gaseous carrier medium to convert the gaseous carrier medium back into a non-gaseous carrier medium;
- an energy conversion arrangement (14, 15; 35, 42) configured to convert the potential energy of the recovered non-gaseous carrier medium into another energy form; and
- a heat return line (16) arranged to use the transport medium heated by the cooling of the carrier medium to contribute, by means of a heat pump (62), to the thermal energy introduced.

15. Device according to Claim 14, further comprising an energy introduction element (19) arranged to introduce thermal energy distributed over the height of the cavity.

16. Device according to Claim 14 or 15, further comprising an energy recovery element (18) configured to recover the introduced thermal energy from geothermal heat, water heat, air heat, fossil energy carriers, nuclear energy carriers and/or solar energy.

17. Device according to any one of Claims 14 to 16, wherein the cooling unit (13; 33; 60) has cooling areas through which a transport medium flows in order to cool the gaseous carrier medium.

18. Device according to any one of Claims 14 to 17, wherein the collector (13) has means for introduction of a substance directly into the carrier medium to support the back-conversion of the gaseous carrier medium into a non-gaseous carrier medium.

19. Device according to any one of Claims 14 to 18, further comprising an intermediate store (41) configured for intermediate storage of the recovered non-gaseous carrier medium before conversion of the potential energy of the carrier medium into another energy form.

20. Device according to any one of Claims 14 to 19, wherein the energy conversion arrangement (14, 15) comprises a fall path (14) arranged to convert the potential energy into kinetic energy by dropping the recovered non-gaseous carrier medium from a greater height to a lesser height, and an energy converter (15) configured to convert the kinetic energy into another energy form.

21. Device according to any one of Claims 14 to 20, wherein the energy conversion arrangement (14, 15) is configured to convert the potential energy of the recovered non-gaseous carrier medium into mechanical energy, electrical energy, energy to generate a chemical energy carrier or energy to generate a physical energy carrier.

22. Device according to any one of Claims 14 to 21, further comprising an intermediate store (44) configured for intermediate storage of the recovered non-gaseous carrier medium after conversion of the potential energy into another energy form.

23. Device according to any one of Claims 14 to 22, wherein the energy conversion arrangement (14, 15) is arranged such that the recovered non-gaseous carrier medium, after conversion of the potential energy into another energy form, is supplied back to the aggregation state changer (12) arranged at the lower end of the cavity (11).

24. Device according to any one of Claims 14 to 23, wherein the non-gaseous carrier medium is distilled by conversion into a gaseous carrier medium, further comprising an extraction connection (40) configured for at least partial extraction of the recovered non-gaseous carrier medium before or after conversion of the potential energy into another energy form.

25. Device according to any one of Claims 14 to 24, wherein the cavity (11) comprises a filling medium that is carried along by the carrier medium.

26. Device according to any one of Claims 14 to 25, wherein the energy conversion arrangement (14, 15) comprises a fall path (14) configured to enable a dropping of the recovered non-gaseous carrier medium from a greater height to a lesser height, and wherein the energy conversion arrangement (14, 15) comprises a turbine (15) which is arranged at the lesser high and which is configured to be driven by dropping carrier medium.

## Revendications

1. Procédé de conversion d'énergie comprenant les étapes consistant à :
a) convertir (21) un milieu de support sous forme non gazeuse en un milieu de support sous forme gazeuse en introduisant une énergie thermique de sorte que le milieu de support sous forme gazeuse s'élève et qu'une énergie thermique introduite soit convertie en une énergie potentielle ;
b) reconvertir (22) le milieu de support sous forme gazeuse à un niveau spécifié en un milieu de support sous forme non gazeuse en refroidissant le milieu de support sous forme gazeuse au moyen d'un milieu de transport ;
c) convertir (24, 25) l'énergie potentielle du milieu de support sous forme non gazeuse recyclé en une autre forme d'énergie ; et
d) utiliser (23) un réchauffement, effectué par le refroidissement du milieu de support, du milieu de transport afin de fournir un apport à l'énergie thermique introduite au moyen d'une pompe à chaleur (61).

2. Procédé selon la revendication 1, dans lequel par ailleurs de l'énergie thermique est introduite dans le milieu de support de manière répartie sur le niveau que le milieu de support sous forme gazeuse surmonte.

3. Procédé selon la revendication 1 ou 2, dans lequel l'énergie thermique introduite est obtenue de la chaleur terrestre, de la chaleur de l'eau, de la chaleur de l'air, d'un support d'énergie fossile, d'un support d'énergie nucléaire et/ou de l'énergie solaire.

4. Procédé selon l'une quelconque des revendications 1 à 3, dans lequel le refroidissement est effectué en ce qu'un milieu de transport est acheminé à travers des zones de refroidissement (13 ; 33) disposées au niveau spécifié.

5. Procédé selon l'une quelconque des revendications 1 à 4, dans lequel une substance est introduite directement dans le milieu de support afin de soutenir la reconversion.

6. Procédé selon l'une quelconque des revendications 1 à 5, dans lequel le milieu de support sous forme non gazeuse recyclé est stocké de manière temporaire avant la conversion de l'énergie potentielle obtenue du milieu de support en une autre forme d'énergie.

7. Procédé selon l'une quelconque des revendications 1 à 6, dans lequel aux fins de la conversion de l'énergie potentielle du milieu de support en une autre forme d'énergie, l'énergie potentielle est convertie (24) dans un premier temps en une énergie cinétique par chute du milieu de support sous forme non gazeuse recyclé d'un niveau plus élevé à un niveau inférieur, puis l'énergie cinétique est convertie (25) en une autre forme d'énergie.

8. Procédé selon l'une quelconque des revendications 1 à 7, dans lequel l'énergie potentielle est convertie en une énergie mécanique, en une énergie électrique, en une énergie servant à produire un support d'énergie chimique et/ou en une énergie servant à produire un support d'énergie physique.

9. Procédé selon l'une quelconque des revendications 1 à 8, dans lequel le milieu de support sous forme non gazeuse recyclé est stocké de manière temporaire sous une autre forme d'énergie après la conversion de l'énergie potentielle.

10. Procédé selon l'une quelconque des revendications 1 à 9, dans lequel le milieu de support sous forme non gazeuse recyclé est employé ultérieurement au moins en partie dans un circuit fermé, qui se poursuit avec l'étape a) après la conversion de l'énergie potentielle sous une autre forme d'énergie.

11. Procédé selon l'une quelconque des revendications 1 à 10, dans lequel le milieu de support sous forme non gazeuse est distillé lors de l'étape a) par la conversion en un milieu de support sous forme gazeuse et dans lequel le milieu de support sous forme non gazeuse distillé, recyclé est prélevé au moins en partie avant ou après la conversion de l'énergie potentielle en une autre forme d'énergie.

12. Procédé selon l'une quelconque des revendications 1 à 11, dans lequel le milieu de support sous forme gazeuse s'élève dans une cavité (11), qui comprend un milieu de remplissage, qui est entraîné avec le milieu de support.

13. Procédé selon l'une quelconque des revendications précédentes 1 à 12, dans lequel aux fins de la conversion de l'énergie potentielle du milieu de support en une autre forme d'énergie, le milieu de support sous forme non gazeuse recyclé chute d'un niveau plus élevé à un niveau inférieur afin d'entraîner une turbine (15 ; 35) sur le niveau inférieur.

14. Dispositif de conversion d'énergie comprenant :
- une cavité (11) ;
- un système de changement d'état d'agrégation (12 ; 32) disposé au niveau de l'extrémité inférieure de la cavité (11), formé afin de convertir un milieu de support sous forme non gazeuse en un milieu de support sous forme gazeuse en introduisant de l'énergie thermique, de sorte que le milieu de support s'élève dans la cavité (11) et qu'une énergie thermique introduite soit convertie en une énergie potentielle ;
- un collecteur disposé au niveau de l'extrémité supérieure de la cavité (11), formé afin de collecter un milieu de support sous forme non gazeuse recyclé à partir du support de milieu sous forme gazeuse, dans lequel le collecteur présente une unité de refroidissement (13 ; 33 ; 60) qui est formée pour être traversée par un milieu de transport en vue d'un refroidissement du milieu de support sous forme gazeuse afin de reconvertir le milieu de support sous forme gazeuse en un milieu de support sous forme non gazeuse ;
- un ensemble de conversion d'énergie (14, 15 ; 35, 42) formé afin de convertir l'énergie potentielle du milieu de support sous forme non gazeuse recyclé en une autre forme d'énergie ; et
- un conduit de retour de chaleur (16), qui est disposé afin d'utiliser le milieu de transport réchauffé par le refroidissement du milieu de support afin de fournir un apport à l'énergie thermique introduite au moyen d'une pompe à chaleur (62).

15. Dispositif selon la revendication 14, comprenant en outre un élément d'introduction d'énergie (19) disposé afin d'introduire de l'énergie thermique de manière répartie sur la hauteur de la cavité.

16. Dispositif selon la revendication 14 ou 15, comprenant en outre un élément d'obtention d'énergie (18) formé pour obtenir l'énergie thermique introduite à partir de la chaleur terrestre, de la chaleur de l'eau, de la chaleur de l'air, de supports d'énergie fossiles, de supports d'énergie nucléaires et/ou de l'énergie solaire.

17. Dispositif selon l'une quelconque des revendications 14 à 16, dans lequel l'unité de refroidissement (13 ; 33 ; 60) présente des zones de refroidissement, qui sont traversées par un milieu de transport en vue du refroidissement du milieu de support sous forme gazeuse.

18. Dispositif selon l'une quelconque des revendications 14 à 17, dans lequel le collecteur (13) présente des moyens servant à introduire une matière directement dans le milieu de support servant à soutenir la reconversion du milieu de support sous forme gazeuse en un milieu de support sous forme non gazeuse.

19. Dispositif selon l'une quelconque des revendications 14 à 18, comprenant en outre un système de stockage temporaire (41) formé pour stocker de manière temporaire le milieu de support sous forme non gazeuse recyclé avant la conversion de l'énergie potentielle du milieu de support en une autre forme d'énergie.

20. Dispositif selon l'une quelconque des revendications 14 à 19, dans lequel l'ensemble de conversion d'énergie (14, 15) comprend une voie de chute (14) disposée pour convertir l'énergie potentielle en une énergie cinétique par chute du milieu de support sous forme non gazeuse recyclé d'un niveau plus élevé à un niveau inférieur, ainsi qu'un convertisseur d'énergie (15) formé afin de convertir l'énergie cinétique en une autre forme d'énergie.

21. Dispositif selon l'une quelconque des revendications 14 à 20, dans lequel l'ensemble de conversion d'énergie (14, 15) est réalisé afin de convertir l'énergie potentielle du milieu de support sous forme non gazeuse recyclé en énergie mécanique, en énergie électrique, en énergie servant à produire un support d'énergie chimique ou en énergie servant à produire un support d'énergie physique.

22. Dispositif selon l'une quelconque des revendications 14 à 21, comprenant en outre un système de stockage temporaire (44) formé afin de stocker de manière temporaire le milieu de support sous forme non gazeuse recyclé après la conversion de l'énergie potentielle en une autre forme d'énergie.

23. Dispositif selon l'une quelconque des revendications 14 à 22, dans lequel l'ensemble de conversion d'énergie (14, 15) est disposé de telle sorte que le milieu de support sous forme non gazeuse recyclé soit ramené à nouveau au système de changement d'état d'agrégation (12) disposé au niveau de l'extrémité inférieure de la cavité (11) après la conversion de l'énergie potentielle dans une autre forme d'énergie.

24. Dispositif selon l'une quelconque des revendications 14 à 23, dans lequel le milieu de support sous forme non gazeuse est distillé par la conversion en un milieu de support sous forme gazeuse, comprenant en outre un raccord de prélèvement (40), formé afin de prélever au moins en partie le milieu de support sous forme non gazeuse recyclé avant ou après la conversion de l'énergie potentielle en une autre forme d'énergie.

25. Dispositif selon l'une quelconque des revendications 14 à 24, dans lequel la cavité (11) comprend un milieu de remplissage, qui est entraîné par le milieu de support.

26. Dispositif selon l'une quelconque des revendications 14 à 25, dans lequel l'ensemble de conversion d'énergie (14, 15) comprend une voie de chute (14) réalisée afin de permettre une chute du milieu de support sous forme non gazeuse recyclé d'un niveau plus élevé à un niveau inférieur, et dans lequel l'ensemble de conversion d'énergie (14, 15) comprend une turbine (15), qui est disposée sur le niveau inférieur et qui est formée pour être entraînée par le milieu de support chutant.
